# EUROPEAN PATENT APPLICATION

(11) **EP 2 995 438 A1**
(43) Date of publication of application: **16.03.2016**
(21) Application number: 14184210.4
(22) Date of filing: 10.09.2014
(51) Int. Cl.: B29C 37/00, B05D 1/02

(54) **A method of monitoring the process of coating a workpiece surface**

(71) Applicant: Airbus Operations GmbH, 21129 Hamburg (DE)
(72) Inventor: Hudaff, Dennis, 21129 Hamburg (DE); Galas, Björn, 21129 Hamburg (DE)
(74) Representative: UEXKÜLL & STOLBERG

(57) **Abstract**

To monitor the process of coating a workpiece surface, in particular the surface of a mold element (1, 10) for producing a component of a fibre reinforced polymer, with a coating material (2, 12) comprising an evaporating solvent, after applying the coating material (2, 12) the surface area coated is scanned by means of a thermographic camera (6, 16) and the temperature distribution over the surface area is determined.

## Description

The invention relates to a method of monitoring the process of coating a workpiece surface, in particular the surface of a mold element for producing a component of a fibre reinforced polymer, e.g. a carbon fibre reinforced polymer, with a coating material comprising an evaporating solvent.

In many cases it is required to obtain a uniform coating of the workpiece surface without any areas of such surface left free of coating. For instance, to coat the surface of a mold element for producing a component of a fibre reinforced polymer (FRP) with a release agent, it is essential to ensure that the entire surface that comes in contact with the FRP is uniformly coated to avoid sticking of the FRP to areas of the mold surface which would damage the molded element and the mold upon removal of the molded element from the mold.

It is an object of the invention to monitor a coating process of the type mentioned above to determine whether a uniform continuous coating is obtained.

To solve such an object the invention provides for scanning of the surface area coated by means of a thermographic camera and determining the temperature distribution of the surface area, wherein the thermographic camera is preferably an infrared camera.

As the coating applied comprises an evaporating solvent, the temperature of the coating applied is gradually reduced due to evaporation of the solvent, whereas areas of the workpiece surface left uncoated do not change their temperatures. The thermographic camera evaluates the temperature distribution over the surface area coated point by point and provides for an indication of areas left uncoated.

The result of the evaluation by means of the thermographic camera can be further improved by determining the temperature gradients of the surface area coated point by point.

In many cases a relatively large workpiece surface has to be coated so that the spray head applying the coating material needs to be moved over the workpiece surface. To monitor the coating process the thermographic camera is then moved over the workpiece surface in constant distance from the spray head. For this purpose, the spray head and the thermographic camera may be mounted on a common support beam.

When a workpiece surface is to be coated over which the spray head is to be moved, the temperature of the workpiece surface may not be uniform over the entire area to be coated. To avoid evaluation errors due to such different temperatures, prior to applying the coating material, the workpiece may be scanned to obtain reference values of the temperature distribution on the workpiece surface. Such scanning may be effected by an additional thermographic camera moved in constant distance from said spray head. It is also possible to use a thermographic camera which is located laterally with respect to the spray head and which effects a line scan both in front and behind the spray head.

By determining the temperature distribution on the workpiece surface prior to applying the coating material, information is obtained which permits adjustment of the thermographic camera to avoid measurement errors due to differences in temperature of the coating applied in different areas due to different temperatures of the workpiece surface coated.

In the following the invention will be described with respect to embodiments schematically and simplified shown in the drawings.
- Fig. 1: shows a workpiece to be coated and thereafter scanned by an infrared camera.
- Fig. 2: shows schematically a workpiece to be coated by a coating head and to be scanned by two infrared cameras.

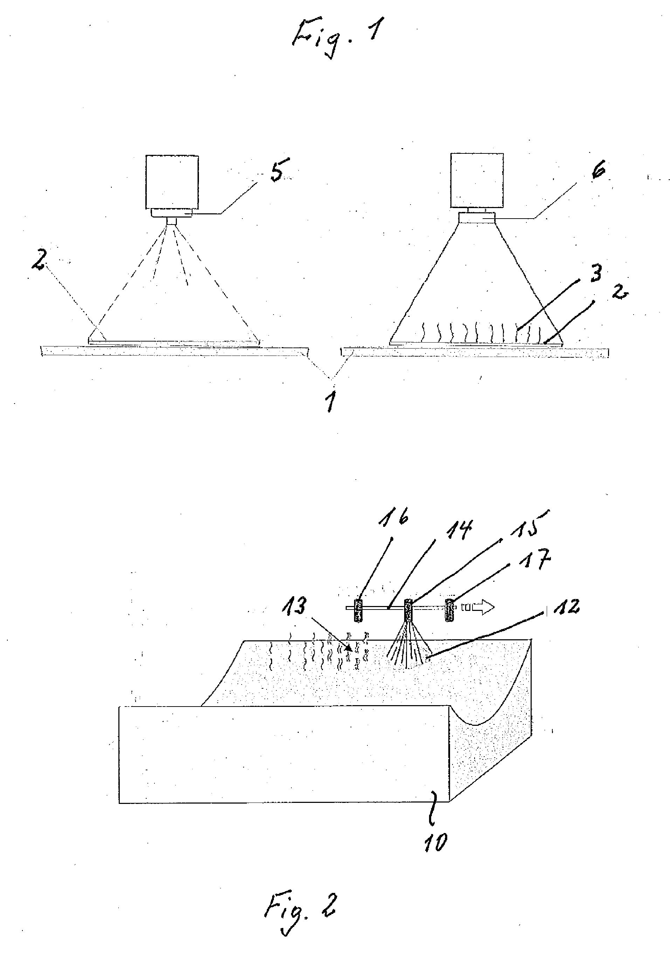

In Fig. 1 a workpiece 1 is shown to which a coating 2, e.g. a release agent, comprising an evaporating solvent, is applied by means of a spray head 5. From the coating 2 the solvent evaporates, as indicated at 3, and causes a temperature reduction of such coating. The temperature distribution over the coating is determined by means of an infrared camera 6, wherein this camera may determine either the current temperature or the temperature gradient, i.e. the temperature in the course of time.

As only in those areas which are carrying the coating 2 a temperature reduction occurs, the infrared camera 6, in addition to the temperature reduction, will detect areas of the workpiece 1 which are not covered by the coating 2, since in these areas no evaporation of the solvent and, thus, no temperature reduction occurs.

Fig. 2 shows in principle an arrangement for monitoring applying of a coating material 12 onto a larger workpiece 10. The indicated workpiece may be part of a mold member to be used for producing an element of a fibre reinforced polymer, e.g. a carbon fibre reinforced polymer (CFRP). To the surface which comes in contact with the polymer, the coating material in form of a release agent comprising an evaporating solvent is to be applied. Application occurs by means of a spray head 15 which is mounted on a support beam 14. This support beam carries an infrared camera 16 and an additional infrared camera 17, as indicated. The support beam may be connected to an arm of a robot (not shown) to effect movement of the support beam and, therefore, the spray head 15 over the surface of the mold member 1, in the direction indicated by the arrow.

When the release agent is applied, the solvent comprised therein evaporates, as indicated at 13, so that the temperature of the coating is reduced. This temperature is detected by means of the infrared camera 16 provided in a fixed distance from the spray head 15. The temperature and/or the temperature gradient detected represents the corresponding properties of the surface coated, i.e. a reduced temperature in the coated areas and a non-reduced temperature in those areas where no coating has been effected. Thus, an incomplete coating can be detected.

At the side of the spray head 15 opposite to the infrared camera 16 an additional infrared camera 17 is mounted on the support beam 14. This additional camera 17 is used to scan the surface of the workpiece 10 prior to applying the coating material 12. Thereby temperature differences in the surface of the workpiece 10 can be determined and by conventional evaluating means signals can be generated for taking into consideration the differences in temperature in the not yet coated surface when evaluating the temperature determined by the infrared camera 16 of these areas after coating.

## Claims

1. A method of monitoring the process of coating a workpiece surface, in particular the surface of a mold element for producing a component of a fibre reinforced polymer, with a coating material comprising an evaporating solvent, **characterized in that** after applying the coating material the surface area coated is scanned by means of a thermographic camera (6; 16) and the temperature distribution over the surface area is determined.

2. A method according to claim 1, **characterized in that** an infrared camera (6; 16) is used.

3. A method according to claim 1 or 2, **characterized in that** the thermographic camera (6; 16) determines the temperature gradients of the surface area coated point by point.

4. A method according to one of claims 1 to 3, **characterized in that** the thermographic camera (16) is moved over the workpiece surface following movement of the spray head (15) applying the coating material in constant distance.

5. A method according to claim 4, **characterized in that** the spray head (15) and the thermographic camera (16) are mounted on a common support beam (14).

6. A method according to one of claims 1 to 5, **characterized in that** prior to applying the coating material said workpiece surface is scanned, preferably by means of an additional thermographic camera (17) to obtain reference values of the temperature distribution on the workpiece surface.

7. A method according to claim 6, **characterized in that** the additional thermographic camera (17) is moved in constant distance from said spray head (15).

8. A method according to one of claims 1 to 7, **characterized in that** a release agent is used as coating material.
